# EUROPÄISCHE PATENTSCHRIFT

(11) **EP 1 468 574 B1**
(45) Veröffentlichungstag und Bekanntmachung des Hinweises auf die Patenterteilung: **20.08.2008**
(21) Anmeldenummer: 03702188.8
(22) Anmeldetag: 23.01.2003
(51) Int. Cl.: H04Q 3/72, H04M 7/00

(54) **VORRICHTUNG UND VERFAHREN ZUR SIGNALISIERUNG DER ANRUFER-KENNUNG AN EINEN ENTFERNTEN ORT**
DEVICE AND METHOD FOR SIGNALING A CALLER IDENTIFICATION TO A REMOTE LOCATION
DISPOSITIF ET PROCEDE PERMETTANT D'INDIQUER UNE IDENTIFICATION D'APPEL A UN ENDROIT ELOIGNE

(30) Priorität: 23.01.2002 AT 1052002
(43) Veröffentlichungstag der Anmeldung: 20.10.2004
(73) Patentinhaber: Kapsch Carriercom AG, 1100 Wien (AT)
(72) Erfinder: ANGERER, Christian, A-1130 Wien (AT); EICHBERGER, Michael, A-1230 Wien (AT)
(74) Vertreter: Weiser, Andreas
(86) Internationale Anmeldenummer: PCT/AT2003/000021
(87) Internationale Veröffentlichungsnummer: WO 2003/063519

(56) Entgegenhaltungen:
- EP-A- 0 869 688
- EP-A- 1 211 875
- WO-A-01/47213
- WO-A-01/74026

## Beschreibung

Die vorliegende Erfindung betrifft eine Vorrichtung zur Signalisierung der in einem Telephonnetz über zumindest ein Vermittlungsamt zu einem angerufenen Telephonapparat übermittelten Anrufer-Kennung an einen vom angerufenen Telephonapparat entfernten Ort,
wobei das Telephonnetz mit einer Dienstlogikeinheit nach dem Intelligent-Network-Standard und der entfernte Ort mit einem Internet-Terminal mit einer eindeutigen Internetadresse ausgestattet ist,
das Vermittlungsamt mit einem Intelligent-Network-Hook zur Dienstlogikeinheit versehen ist, welcher eine übermittelte Anrufer-Kennung detektiert und zusammen mit einer Kennung des angerufenen Telephonapparates an einen Dienst der Dienstlogikeinheit sendet, und
die Dienstlogikeinheit eine Schnittstelle zum Internet aufweist.

Die Erfindung betrifft ferner ein Verfahren zur Signalisierung der in einem Telephonnetz über zumindest ein Vermittlungsamt zu einem angerufenen Telephonapparat übermittelten Anrufer-Kennung an einen vom angerufenen Telephonapparat entfernten Ort, wobei das Telephonnetz mit einer Dienstlogikeinheit nach dem Intelligent-Network-Standard mit einer Schnittstelle zum Internet und der entfernte Ort mit einem Internet-Terminal mit einer eindeutigen Internetadresse ausgestattet ist.

Die Übermittlung der Kennung eines Anrufers (Calling Line Identification, CLID, bzw. Calling Line Identification Presentation, CLIP), z.B. seiner Telephonnummer, zur Anzeige am angerufenen Telephonapparat ist ein nützliches Leistungsmerkmal moderner Telephonnetze und z.B. für ISDN-Netze in dem Standard T I.251.3 (08/92) der International Telecommunication Union (ITU) beschrieben.

Zur Signalisierung der Anruferkennung an einen entfernten Ort sind bisher mehrere Systeme bekannt. Unter diesen hat z.B. das System der Anrufweiterleitung den Nachteil, daß es den Anruf zur Gänze umleitet, was wieder rückgängig gemacht werden muß, wenn der Anruf tatsächlich am angerufenen Telephonapparat entgegengenommen werden soll; das bekannte System der Fernabfrage eines Anrufbeantworters erfordert wiederum einen hohen apparativen Aufwand vom Teilnehmer.

Eine Vorrichtung und ein Verfahren der einleitend genannten Art sind insbesondere aus der EP 0 978 983 bekannt. Diese Schrift beschreibt das Triggern eines Dienstes in einer Dienstlogikeinheit nach dem Intelligent-Network-Standard, welcher Dienst die Anruferkennung an einen Server mit Internetschnittstelle sendet, der diese dann zur Abfrage über das Internet bereitstellt. Der Server kann die empfangene Anruferkennung auch über Email an einen Benutzer senden. Beide Varianten ermöglichen jedoch keine Benachrichtigung eines Benutzers in Echtzeit, da der Zeitpunkt der Abfrage vom Benutzer abhängt und es bei Email-Nachrichten keine gewährleistete Zeitspanne gibt, innerhalb der die Nachricht zuzustellen ist.

Die Erfindung setzt sich zum Ziel, eine Vorrichtung bzw. ein Verfahren der genannten Art zu schaffen, mit welchem die Anrufer-Kennung in Echtzeit an einen entfernten Ort signalisiert werden kann, ohne den gesamten Anruf weiterleiten zu müssen oder die Anschaffung spezialisierter Hardware vom Teilnehmer zu verlangen.

Dieses Ziel wird mit einer Vorrichtung der eingangs genannten Art erreicht, die sich gemäß der Erfindung dadurch auszeichnet,
daß ein Internetproxy vorgesehen ist, welcher eine Datenbank verwaltet, in der Telephonapparat-Kennungen mit zugeordneten Internetadressen eintragbar sind,
wobei der genannte Dienst die empfangene Anrufer-Kennung und Telephonapparat-Kennung über die Schnittstelle zum Internetproxy sendet, und
der Internetproxy die der Telephonapparat-Kennung zugeordnete Internetadresse in der Datenbank ermittelt und die Anrufer-Kennung an die ermittelte Internetadresse sendet.

Ein entsprechendes Verfahren gemäß der Erfindung ist in Anspruch 3 gekennzeichnet.

Auf diese Weise kann die Information über eingehende bzw. eingegangene Anrufe aktiv zum Internet-Terminal an der angegebenen Internetadresse gesendet werden, gleichsam "online", in "Echtzeit". Der Teilnehmer am Internet-Terminal kann daher unmittelbar auf einen eingehenden oder entgangenen Telephonanruf reagieren, z.B. das Gespräch umleiten und entgegennehmen, sofort zurückrufen, Dispositionen treffen usw. Eine solche direkte Interaktion mit dem Gespräch ist mit den bekannten Lösungen nicht möglich.

Die erfindungsgemäße Verwendung eines Internetproxys mit einer Datenbank zur Aufnahme von Zuordnungspaaren von Telephonnummern und Internetadressen ermöglicht darüber hinaus dem Teilnehmer eine Registrierung seiner gerade aktuellen Internetadresse von jedem beliebigen Punkt der Welt aus, so daß die Signalisierung auch zu jedem beliebigen Ort der Welt erfolgen kann. Damit ist eine Information über entgangene Anrufe z.B. auf Reisen, bei Wohnungswechsel usw. möglich. Der Benutzer benötigt dazu keinerlei spezialisierte Hardware, sondern lediglich ein übliches Internetterminal.

Besonders vorteilhaft ist es, wenn die genannte Schnittstelle eine SIP-Schnittstelle und der Internetproxy ein SIP-Proxy nach dem Session-Initiation-Protocol (SIP) ist. Das Session-Initiation-Protocol ist in der Empfehlung RFC 2543 (03/99) der Internet Engineering Task Force (IETF) definiert und besonders geeignet, da es einen Internetproxy mit Registrierungsdatenbank zur Registrierung der aktuellen Internetadresse eines Teilnehmers bereitstellt.

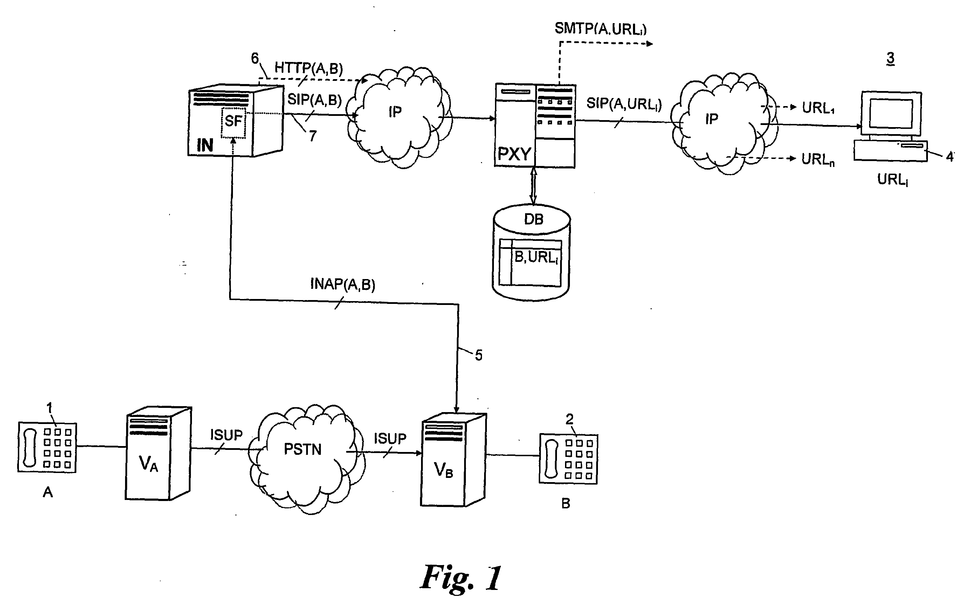

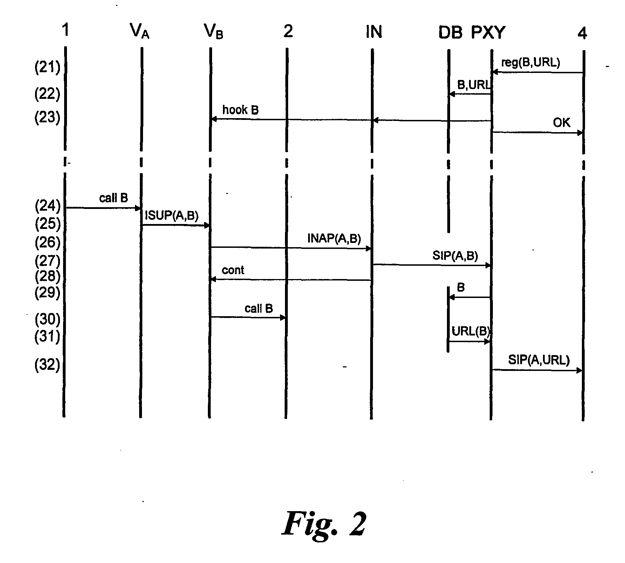

Die Erfindung wird nachstehend anhand von in den Zeichnungen dargestellten Ausführungsbeispielen näher erläutert. In den Zeichnungen zeigt Fig. 1 ein Blockschaltbild einer Vorrichtung gemäß der Erfindung und Fig. 2 ein Sequenzdiagramm eines Verfahrens gemäß der Erfindung, das mit Hilfe der Vorrichtung von Fig. 1 ausgeführt wird.

In Fig. 1 ist ein öffentliches Telephonnetz PSTN gezeigt, zu dem auch zwei beispielhaft dargestellte Vermittlungsämter V_{A} und V_{B} zu zählen sind. Das Telephonnetz PSTN ist vorzugsweise nach dem ISDN-Standard aufgebaut und die Vermittlungsämter V_{A} und V_{B} verkehren untereinander bevorzugt über eine Schnittstelle nach dem ISUP-Standard (ISDN User Part) Q.761 bis Q.764 oder Q.767 der ITU.

An das Vermittlungsamt V_{A} ist ein erster beispielhafter Telephonapparat 1 und an das Vermittlungsamt V_{B} ein zweiter beispielhafter Telephonapparat 2 angeschlossen. Der Telephonapparat 1 besitzt eine Kennung A, z.B. Telephonnummer, und der Telephonapparat 2 eine Kennung B, z.B. Telephonnummer. In dem gezeigten Beispiel erfolgt gerade ein Rufaufbau vom Telephonapparat 1 zum Telephonapparat 2 ("Anruf").

Das Telephonnetz PSTN ist zur Übermittlung der AnruferKennung A zum angerufenen Telephonapparat 2 ausgebildet, z.B. nach dem ITU-Standard T I.251.3 - Calling Line Identification Presentation (CLIP). Die Anrufer-Kennung A kann auf einem entsprechenden Display des Telephonapparates 2 angezeigt werden, bevor noch der Anruf entgegengenommen wird.

Die Funktionen des Telephonnetzes PSTN werden von einer übergeordneten Dienstlogikeinheit IN nach dem Standard des "Intelligenten Netzes" (Intelligent Network, IN) gesteuert. Der IN-Standard ist in den ITU-Spezifikationen Q.1200 - Intelligent Network (IN) Recommendation Structure bis Q.1290 - Glossary of Terms Used in the Definition of Intelligent Networks definiert. Es versteht sich, daß die Intelligent-Network-Funktionalitäten auch auf mehrere physische Einheiten verteilt sein können; stellvertretend ist nur eine physische Komponente in Form der Dienstlogikeinheit IN dargestellt.

Die Interaktion zwischen dem Telephonnetz PSTN und der Dienstlogikeinheit IN des Intelligenten Netzes erfolgt über Triggerpunkte bzw. Hooks, die in den Vermittlungsämtern gesetzt werden, hier einem Hook 5 im Vermittlungsamt V_{B}. Die Kommunikation auf dem Hook 5 erfolgt z.B. nach dem INAP-Protokoll, spezifiert in ITU-T Q.1210 bis Q.1219.

Der Hook 5 im Vermittlungsamt V_{B} hat die Funktion eines Monitors bzw. Triggers und überwacht das Eingehen eines Anrufes am Telephonapparat 2. In diesem Fall sendet der Hook 5 eine INAP-Nachricht mit der Anrufer-Kennung A und der Kennung B des angerufenen Telephonapparates 2 an die Dienstlogikeinheit IN des Intelligenten Netzes, und zwar an einen Task bzw. Dienst SF in der Dienstlogikeinheit IN.

Die Dienstlogikeinheit IN kann eine erste Schnittstelle 6 zum Internet IP aufweisen. Über die Internet-Schnittstelle 6 kann die empfangene Anrufer-Kennung A zusammen mit der Kennung B des angerufenen Telephonapparates 2 zum Abruf über das Internet IP bereitgestellt werden. Der Abruf kann an einem beliebigen entfernten Ort 3, der mit einem Internet-Terminal 4 ausgestattet ist, über das Internet IP erfolgen, beispielsweise nach dem bekannten HTTP-Protokoll.

Die Dienstlogikeinheit IN weist vorteilhafterweise eine zweite Internet-Schnittstelle 7 auf. Der Dienst SF sendet die Information A, B über die Internet-Schnittstelle 7 an einen ausgewählten Internetproxy PXY im Internet. Das Protokoll auf der Internet-Schnittstelle 7 ist bevorzugt das Session-Initiation-Protocol (SIP) und der Internetproxy PXY demgemäß bevorzugt ein SIP-Proxy. Alternativ kann jedes andere Protokoll verwendet werden.

Der Internetproxy PXY steht mit einer Datenbank DB in Verbindung, in welcher Paare von Telephonapparat-Kennungen B und zugeordneten eindeutigen Internetadressen URLᵢ (Unique Resource Locators) gespeichert sind. Jede der gespeicherten Internetadressen URLᵢ bezeichnet eindeutig ein Internet-Terminal 4. Benutzer können auf diese Weise ihre Internetadresse URLᵢ am Internet-Terminal 4 beim Internetproxy PXY in der Datenbank DB als zu ihrem entfernten Telephonapparat 2 mit der Kennung B gehörend registrieren.

In der vorliegenden Beschreibung wird unter dem Begriff "Internetadresse" jede beliebige in der Technik bekannte Implementierung einer Adresse im Internet verstanden, sei es eine IP-Adresse, eine URL (Unique Resource Locator), eine URI (Unique Resource Identifier) nach SIP-Standard usw.

Benutzer können an verschiedenen Orten unter verschiedenen Internetadressen URL₁ ... URLₙ erreichbar sein. Die zu einer Telephonapparat-Kenhung B registrierte URLᵢ ist daher beliebig eintragbar, änderbar oder austragbar; an einem neuen Ort und anderen Internet-Terminal registriert sich der Benutzer jeweils neu mit seiner aktuellen Internetadresse URLᵢ.

Beim Empfang der SIP-Nachricht SIP(A,B) schlägt der Internetproxy PXY die der Kennung B zugeordnete Internetadresse URLᵢ in der Datenbank DB nach und sendet die Anrufer-Kennung A an die ermittelte Internetadresse URLᵢ weiter. Die Übermittlung kann wieder mittels SIP erfolgen. In diesem Fall wird am Internet-Terminal 4 ein entsprechender SIP-Client installiert. Alternativ kann jedes andere beliebige Protokoll verwendet werden, z.B. das Email-Protokoll SMTP.

Das Verfahren der Erfindung wird anhand Fig. 2 näher erläutert.

In einem ersten Schritt 21 registriert ein Benutzer am Internet-Terminal 4 die Internetadresse URL des Internet-Terminals 4 zusammen mit der Kennung B des entfernten Telephonapparates 2 am Internetproxy PXY. Der Internetproxy PXY speichert das Paar (B,URL) in der Datenbank (Schritt 22). Im Schritt 23 veranlaßt der Internetproxy PXY das Setzen des Hooks 5 in der Dienstlogikeinheit IN und im Vermittlungsamt V_{B}. Die erfolgreiche Registrierung wird anschließend an das InternetTerminal 4 bestätigt.

Zu einem beliebigen späteren Zeitpunkt erfolgt ein Verbindungsaufbau (Anruf) vom Telephonapparat 1 zum Telephonapparat 2, siehe Abfolge call B (Schritt 24) - ISUP(A,B) (Schritt 25) - call B (Schritt 30).

Sobald der Hook 5 im Vermittlungsamt V_{B} den Anruf erkennt, sendet er die INAP-Nachricht INAP(A,B) an die Dienstlogikeinheit IN (Schritt 26). Das Verfahren kann damit enden, daß die Dienstlogikeinheit IN die Information (A,B) über die Internet-Schnittstelle 6 zum Abruf über das Internet bereitstellt (nicht dargestellt).

Vorteilhafterweise setzt das Verfahren wie folgt fort. Im Schritt 27 sendet die Dienstlogikeinheit IN die SIP-Nachricht SIP(A,B) an den Internetproxy PXY. Der Internetproxy PXY greift im Schritt 29 auf die Datenbank DB zu, um die der Kennung B zugeordnete Internetadresse URL(B) zu ermitteln, und verfügt nun über alle Informationen, um die SIP-Nachricht SIP(A,URL) an das Internet-Terminal 4 mit der Internetadresse URL abzusetzen (Schritt 32). Der SIP-Client auf dem Internet-Terminal 4 zeigt die Anrufer-Kennung A (z.B. auf einem Bildschirm) an.

Optional ist es mit Hilfe einer oder mehrerer Komponenten V_{B}, IN, PXY, DB und/oder 4 möglich, ein Zeitprotokoll aller empfangenen Anrufer-Kennungen A aufzubauen, zum Abruf bereitzustellen und/oder weiterzuleiten, so daß am Internet-Terminal 4 auch z.B. eine Liste der letzten entgangenen Anrufe erhalten oder abgerufen werden kann.

Die Erfindung ist selbstverständlich nicht auf die dargestellten Ausführungsformen beschränkt, sondern umfaßt alle Varianten und Modifikationen, die in den Rahmen der angeschlossenen Ansprüche fallen.

## Patentansprüche

1. Vorrichtung zur Signalisierung der in einem Telephonnetz (PSTN) über zumindest ein Vermittlungsamt (V_{A}, V_{B}) zu einem angerufenen Telephonapparat (2) übermittelten AnruferKennung (A) an einen vom angerufenen Telephonapparat (2) entfernten Ort (3),
wobei das Telephonnetz mit einer Dienstlogikeinheit (IN) nach dem Intelligent-Network-Standard und der entfernte Ort (3) mit einem Internet-Terminal (4) mit einer eindeutigen Internetadresse (URL) ausgestattet ist,
das Vermittlungsamt (V_{B}) mit einem Intelligent-Network-Hook (5) zur Dienstlogikeinheit (IN) versehen ist, welcher eine übermittelte Anrufer-Kennung (A) detektiert und zusammen mit einer Kennung (B) des angerufenen Telephonapparates (2) an einen Dienst (SF) der Dienstlogikeinheit (IN) sendet, und
die Dienstlogikeinheit (IN) eine Schnittstelle (7) zum Internet (IP) aufweist, **dadurch gekennzeichnet,**
**daß** ein Internetproxy (PXY) vorgesehen ist, welcher eine Datenbank (DB) verwaltet, in der Telephonapparat-Kennungen (B) mit zugeordneten Internetadressen (URL) eintragbar sind,
wobei der genannte Dienst (SF) die empfangene AnruferKennung (A) und Telephonapparat-Kennung (B) über die Schnittstelle (7) zum Internetproxy (PXY) sendet, und
der Internetproxy (PXY) die der Telephonapparat-Kennung (B) zugeordnete Internetadresse (URL) in der Datenbank (DB) ermittelt und die Anrufer-Kennung (A) an die ermittelte Internetadresse (URL) sendet.

2. Vorrichtung nach Anspruch 1, **dadurch gekennzeichnet, daß** die Schnittstelle (7) eine SIP-Schnittstelle und der Internetproxy (PXY) ein SIP-Proxy nach dem Session-Initiation-Protocol (SIP) ist.

3. Verfahren zur Signalisierung der in einem Telephonnetz (PSTN) über zumindest ein Vermittlungsamt (V_{A}, V_{B}) zu einem angerufenen Telephonapparat (2) übermittelten AnruferKennung (A) an einen vom angerufenen Telephonapparat (2) entfernten Ort (3),
wobei das Telephonnetz mit einer Dienstlogikeinheit (IN) nach dem Intelligent-Network-Standard mit einer Schnittstelle (7) zum Internet (IP) und der entfernte Ort (3) mit einem Internet-Terminal (4) mit einer eindeutigen Internetadresse (URL) ausgestattet ist,
mit den Schritten:
Vorsehen eines Internetproxy (PXY) mit einer Datenbank (DB) und Eintragen von Telephonapparat-Kennungen (B) mit zugeordneten Internetadressen (URL) in der Datenbank (DB),
Detektieren einer Anrufer-Kennung (A) im Vermittlungsamt (V_{B}) und Senden derselben zusammen mit einer Kennung (B) des angerufenen Telephonapparates (2) an die Dienstlogikeinheit (IN),
Senden der Anrufer-Kennung (A) und Telephonapparat-Kennung (B) von der Dienstlogikeinheit über die Schnittstelle (7) zum Internetproxy (PXY),
Ermitteln der zugeordneten Internetadresse (URL) aus der Datenbank (DB) und
Senden der Anrufer-Kennung (A) an die ermittelte Internetadresse (URL).

## Claims

1. An apparatus for signalling the caller identification (A), transmitted in a telephone network (PSTN) via at least one exchange (V_{A}, V_{B}) to a called telephone set (2), to a location (3) remote from the called telephone set (2),
the telephone network being provided with a service logic unit (IN) according to the Intelligent-Network-Standard and the remote location (3) being provided with an internet terminal (4) having a unique internet address (URL),
the exchange (V_{B}) being provided with an Intelligent-Network-Hook (5) to the service logic unit (IN), which Intelligent-Network-hook detects a transmitted caller identification (A) and sends the same, together with an identification (B) of the called telephone set (2), to a service (SF) of the service logic unit (IN), and
the service logic unit (IN) having an interface (7) to the Internet (IP), **characterized in that**
an internet proxy (PXY) is provided managing a database (DB) into which telephone set identifications (B) and internet addresses (URL) attributed thereto can be stored,
wherein said service (SF) sends the received caller identification (A) and telephone set identification (B) via the interface (7) to the internet proxy (PXY), and
the internet proxy (PXY) determines the internet address (URL) attributed to the telephone set identification (B) in the database (DB) and sends the caller identification (A) to the internet address (URL) determined.

2. The apparatus of claim 1, **characterized in that** the interface (7) is a SIP interface and the internet proxy (PXY) is a SIP proxy according to the Session Initiation Protocol (SIP).

3. A method for signalling the caller identification (A), transmitted in a telephone network (PSTN) via at least one exchange (V_{A}, V_{B}) to a called telephone set (2), to a location (3) remote from the called telephone set (2),
the telephone network being provided with a service logic unit (IN) according to the Intelligent-Network-Standard and the remote location (3) being provided with an internet terminal (4) having a unique internet address (URL),
comprising the steps:
providing an internet proxy (PXY) with a database (DB) and storing telephone set identifications (B) with internet addresses (URL) attributed thereto in the database (DB),
detecting a caller identification (A) in the exchange (V_{B}) and sending the same, together with an identification (B) of the called telephone set (2), to the service logic unit (IN),
sending the caller identification (A) and telephone set identification (B) from the service logic unit via the interface (7) to the internet proxy (PXY),
determining the attributed internet address (URL) from the database (DB), and
sending the caller identification (A) to the internet address (URL) determined.

## Revendications

1. Dispositif pour la signalisation de l'identification d'appel (A), communiquée dans un réseau téléphonique (PSTN) par au moins un central de réseau (V_{A}, V_{B}) à un appareil téléphonique (2) appelé, à un endroit (3) éloigné de l'appareil téléphonique appelé (2),
le réseau téléphonique étant muni d'une unité logique de service (IN) selon la norme de réseau intelligent (Intelligent-Network-Standard) et l'endroit éloigné (3) étant muni d'un terminal Internet (4) avec une adresse Internet univoque (URL),
le central de réseau (V_{B}) étant doté d'un Intelligent-Network-Hook (5) vers l'unité de logique de service (IN), qui détecte une identification d'appel (A) transmise et l'émet, conjointement avec une identification (B) de l'appareil téléphonique appelé (2), vers un service (SF) de l'unité de logique de service (IN), et
l'unité de logique de service (IN) présentant une interface (7) vers l'Internet (IP), **caractérisé en ce que**
il est prévu un serveur mandataire Internet (PXY) qui gère une banque de données (DB) dans laquelle peuvent être enregistrées des identifications d'appareils téléphoniques (B) avec les adresses Internet affectées (URL),
ledit service (SF) émet l'identification d'appel (A) et l'identification d'appareil téléphonique (B) reçus, par l'interface (7), vers le serveur mandataire Internet (PXY), et
le mandataire Internet (PXY) détermine l'adresse Internet (URL) affectée à l'identification d'appareil téléphonique (B) dans la banque de données (DB) et envoie l'identification d'appel (A) à l'adresse Internet determinée (URL).

2. Dispositif selon la revendication 1, **caractérisé en ce que** l'interface (7) est une interface SIP et le mandataire Internet (PXY) est un serveur mandataire SIP selon le protocole d'initiation de session (SIP) (Session-Initiation-Protocol).

3. Procédé pour la signalisation de l'identification d'appel (A), communiquée dans un réseau téléphonique (PSTN) par au moins un central de réseau (V_{A}, V_{B}) à un appareil téléphonique (2) appelé, à un endroit (3) éloigné de l'appareil téléphonique appelé (2),
le réseau téléphonique étant muni d'une unité de logique de service (IN) selon la norme de réseau intelligent (Intelligent-Network-Standard) avec une interface (7) vers l'Internet (IP) et l'endroit éloigné (3) étant muni d'un terminal Internet (4) avec une adresse Internet univoque (URL),
avec les étapes consistant à :
doter un serveur mandataire Internet (PXY) d'une banque de données (DB) et enregistrer les identifications d'appareils téléphoniques (B) avec les adresses Internet affectées (URL) dans la banque de données (DB),
détecter une identification d'appel (A) dans la centrale de réseau (V_{B}) et envoyer celle-ci, conjointement avec une identification (B) de l'appareil téléphonique appelé (2), vers l'unité logique de service (IN),
envoyer l'identification d'appel (A) et l'identification d'appareil téléphonique (B) depuis l'unité de logique de service par l'interface (7) vers le serveur mandataire Internet (PXY),
déterminer l'adresse Internet affectée (URL) à partir de la banque de données (DB), et
envoyer l'identification d'appel (A) à l'adresse Internet (URL) déterminée.
